# EUROPEAN PATENT APPLICATION

(11) **EP 2 680 495 A1**
(43) Date of publication of application: **01.01.2014**
(21) Application number: 12764005.0
(22) Date of filing: 28.03.2012
(51) Int. Cl.: H04L 12/28

(54) **METHOD, SYSTEM, AND ACCESS DEVICE FOR USER SERVICE ACCESS**

(30) Priority: 28.03.2011 CN 201110075547
(71) Applicant: Huawei Technologies Co., Ltd., Shenzhen, Guangdong 518129 (CN)
(72) Inventor: WANG, Wenming, Shenzhen Guangdong 518129 (CN); CHEN, Zhongzhou, Shenzhen Guangdong 518129 (CN); YAO, Heping, Shenzhen Guangdong 518129 (CN)
(74) Representative: Maiwald Patentanwalts GmbH
(86) International application number: PCT/CN2012/073204
(87) International publication number: WO 2012/130142

(57) **Abstract**

The present invention discloses a method and a system for user service access and an access device. The method includes: receiving a first packet sent by a home gateway, where the first packet carries a customer virtual local area network identifier that matches the first packet; acquiring, according to feature information of the first packet, a service virtual local area network identifier that matches the first packet; establishing a mapping between the customer virtual local area network identifier and the service virtual local area network identifier according to the customer virtual local area network identifier and the service virtual local area network identifier; sending, according to the mapping between the customer virtual local area network identifier and the service virtual local area network identifier, the first packet to a network corresponding to the service virtual local area network identifier.

## Description

This application claims priority to Chinese Patent Application No. 201110075547.4, filed with the Chinese Patent Office on February March 28, 2011 and entitled "METHOD AND SYSTEM FOR USER SERVICE ACCESS AND ACCESS DEVICE", which is incorporated herein by reference in its entirety.

### TECHNICAL FIELD

Embodiments of the present invention relate to the field of communication technologies, and in particular, to a method and a system for user service access and an access device.

### BACKGROUND

With the development of broadband services, more and more types of services are available for access by a home broadband user. For example, the user may access a set top box, a computer, and a telephone by using a home gateway, where the set top box, the computer, and the telephone correspond to an Internet Protocol television (Internet Protocol Television, IPTV for short) service, a high speed Internet (high speed internet, HSI for short) service, and a Voice over Internet Protocol (Voice over Internet Protocol, VOIP for short) service respectively.

In a current application scenario, certain configurations need to be performed to ensure that services reach a correct gateway or server. For example, different customer virtual local area networks (Customer Virtual Local Area Networks, CVLANs for short) are established for various types of services. On the access device, a service type is identified by a CVLAN, and the identified service type is bridged to a specified service virtual local area network (Service Virtual Local Area Network, SVLAN for short). When an operator provisions a service for a home user, the operator needs to pre-configure CVLAN identifiers used by various types of uplink services on the home gateway of the user, and match the CVLAN identifiers with CVLANs configured on a port associated with the user. After a traffic stream is identified on the access device according to the user port and the CVLANs, the traffic stream is bridged to specified SVLANs.

In the prior art, a bridging correspondence between a CVLAN and an SVLAN needs to be pre-configured on the access device, and the bridging correspondence is a fixed mapping upon completion of the configuration. For example, when a service is provisioned for a home user, SVLANs of three types of services are firstly configured on the access device, that is, "SVLAN 100" corresponding to the HSI, "SVLAN 101" corresponding to the IPTV, and "SVLAN 102" corresponding to the VOIP; CVLANs corresponding to the three SVLANs are configured as "CVLAN10", "CVLAN 11", and "CVLAN 12" respectively on user port_1; then, the three types of services of the user port are bridged to (bridge to) the corresponding SVLANs respectively, for example, "PORT1 CVLAN10 bridge to SVLAN100", "PORT1 CVLAN11 bridge to SVLAN101", and "PORT1 CVLAN12 bridge to SVLAN102". Finally, the following service configurations are performed on each port (FE1, FE2, and FE3) of the home gateway of the user: "FE1 add CVLAN 10", "FE2 add CVLAN 11", and "FE3 add CVLAN 12". Under correct configurations, the FE1 port is connected to the HSI service, the FE2 port is connected to the IPTV service, and the FE3 port is connected to the VOIP service. However, during service provisioning by the operator, if the operator configures a service on the home gateway wrongly, the service fails, for example, if a CVLAN identifier of a packet on the port FE1 is configured as "CVLAN15" on the home gateway, the HSI service connected to the FE1 port fails because "CVLAN15" does not exist in the pre-configured correspondence on the access device. In addition, if the user inserts a network cable wrongly, the service also fails. For example, if the user inserts a network cable of the HSI service into the FE2 port and inserts a network cable of the IPTV service into the FE1 port, a packet of the HSI service, carries "CVLAN11" and a packet of the IPTV service carries "CVLAN10"; according to the pre-configured correspondence on the access device, the HSI service is bridged to "SVLAN101" and the IPTV service is bridged to "SVLAN100", which causes failure of both the HSI service and the IPTV service.

In the prior art, a relationship between a CVLAN and an SVLAN needs to be pre-configured on an access device, and a CVLAN configured on the access device must be consistent with a CVLAN on a home gateway. The configuration method is complex and error-prone, thereby causing failure of services.

### SUMMARY

The present invention provides a method and a system for user service access and an access device to overcome defects in the prior art that a method for user service access configuration is complex and error-prone, and to simplify user service access configurations and reduce errors.

An embodiment of the present invention provides a method for user service access, including:
receiving a first packet sent by a home gateway, where the first packet carries a customer virtual local area network identifier that matches the first packet;
acquiring, according to feature information of the first packet, a service virtual local area network identifier that matches the first packet;
establishing a mapping between the customer virtual local area network identifier and the service virtual local area network identifier according to the customer virtual local area network identifier and the service virtual local area network identifier; and
sending, according to the mapping between the customer virtual local area network identifier and the service virtual local area network identifier, the first packet to a network corresponding to the service virtual local area network identifier.

An embodiment of the present invention provides an access device, including:
a receiving unit, configured to receive a first packet sent by a home gateway, where the first packet carries a customer virtual local area network identifier that matches the first packet;
an acquiring unit, configured to acquire, according to feature information of the first packet, a service virtual local area network identifier that matches the first packet;
a mapping establishing unit, configured to establish a mapping between the customer virtual local area network identifier and the service virtual local area network identifier according to the customer virtual local area network identifier and the service virtual local area network identifier; and
a forwarding unit, configured to send, according to the mapping between the customer virtual local area network identifier and the service virtual local area network identifier, the first packet to a network corresponding to the service virtual local area network identifier.

An embodiment of the present invention also provides a system for user service access, including a home gateway and an access device, where:
the home gateway is configured to receive a first packet sent by a user terminal, and send the first packet to an access service; and
the access device is configured to: receive a first packet sent by the home gateway, where the first packet carries a customer virtual local area network identifier that matches the first packet; acquire, according to feature information of the first packet, a service virtual local area network identifier that matches the first packet; establish a mapping between the customer virtual local area network identifier and the service virtual local area network identifier according to the customer virtual local area network identifier and the service, virtual local area network identifier; and send, according to the mapping between the customer virtual local area network identifier and the service virtual local area network identifier, the first packet to a network corresponding to the service virtual local area network identifier.

By using the method and the system for user service access and the access device, after a user port receiving a first packet acquires, according to feature information of the first packet, a service virtual local area network identifier that matches the first packet, the user port may automatically establish, according to a customer virtual local area network identifier carried in the first packet, a mapping between the customer virtual local area network identifier and the service virtual local area network identifier. This eliminates the need to pre-configure a mapping between the customer virtual local area network identifier and the service virtual local area network identifier on the access device, thereby simplifying access configurations during user service provisioning. In addition, a user is capable of always acquiring a correct mapping between the customer virtual local area network identifier and the service virtual local area network identifier by inserting a network cable into any one network port of a home gateway, thereby avoiding a case where services fail because the user inserts a network cable into a wrong network port of the home gateway. Therefore, the configuration of the method for user service access is simple and less error-prone, and may ensure the smoothness of services.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a multi-service access scenario according to an embodiment of the present invention;
FIG. 2 is a flowchart of a method for user service access according to a first embodiment of the present invention;
FIG. 3 is a flowchart of a method for user service access according to a second embodiments of the present invention;
FIG. 4 is a schematic diagram of the application of the method for user service access provided in a second embodiment of the present invention in different service types;
FIG. 5 is a schematic diagram of the application of the method for user service access provided in a second embodiments of the present invention in an IP packet;
FIG. 6 is a schematic structural diagram of an access device according to a third embodiment of the present invention; and
FIG. 7 is a schematic structural diagram of an access device according to a fourth embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

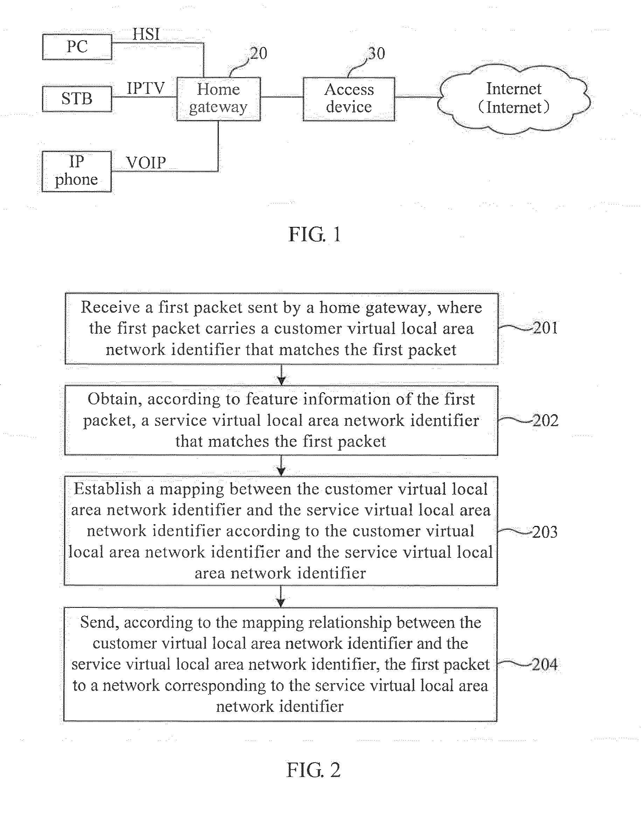

FIG. 1 is a schematic diagram of a multi-service access scenario according to an embodiment of the present invention. As shown in FIG. 1, a user may set a home gateway 20. In an HSI service, a personal computer (PC) may access the Internet (internet) by using the home gateway 20; in an IPTV service, a set top box (Set Top Box, STB for short) may receive television programs by using the home gateway 20; in a VOIP service, an IP phone (IP PHONE) may be connected to a softswitch by using the home gateway. In the multi-service access scenario, an access device 30 acting as a convergence device and a bridging device may converge services on the user home gateway 20 and then transmit the converged services to an upper layer network. A virtual local area network identifier (VLANID) added to a packet sent by the home gateway to the access device is a CVLAN identifier. After the packet reaches the access device, the access device adds a VLAN ID to the packet as an SVLAN identifier.

With respect to the structure diagram of FIG. 1, a method for user service access is further illustrated in FIG. 2. FIG. 2 is a flowchart of a method for user service access according to a first embodiment of the present invention. As shown in FIG. 2, the method for user service access includes:
Step 201: Receive a first packet sent by a home gateway, where the first packet carries a customer virtual local area network identifier that matches the first packet.

Before step 201, a service access mode of each user port on an access device may be pre-configured as an auto-sensing mode. After receiving a packet sent by a home gateway, a user port set to the auto-sensing mode starts an auto-sensing process for the received packet: If the user port set to the auto-sensing mode receives the first packet (for example, an initial packet of a service type or a first packet after an access error occurs, where the user port does not have a mapping corresponding to a customer virtual local area network identifier carried in the first packet), the user port may establish a mapping between the customer virtual local area network identifier of the first packet and a service virtual local area network identifier; if the user port receives a packet except the first packet, the user port may directly query a corresponding service virtual local area network identifier according to the customer virtual local area network identifier of the packet, and then forward the packet.
Step 202: Acquire, according to feature information of the first packet, a service virtual local area network identifier that matches the first packet.

Correspondence between a service type and a service virtual local area network identifier may be pre-configured on the access device. For example, the correspondence between the service type and the service virtual local area network identifier is stored in the access device by using a correspondence table. Further, step 202 may specifically include: acquiring a service type of the first packet through an analysis according to the feature information of the first packet; and acquiring, according to the service type, a service virtual local area network that matches the service type. The feature information may be preferentially at least one of a user encapsulation type, a dial-up packet keyword, a packet format, a version number, or an Ethernet type; and the service type may preferentially include at least one of a high speed Internet service, an Internet Protocol television service, a voice over Internet Protocol service, an Internet Protocol version 4 (IPv4) service, and an Internet Protocol version 6 (IPv6) service.
Step 203: Establish a mapping between the customer virtual local area network identifier and the service virtual local area network identifier according to the customer virtual local area network identifier and the service virtual local area network identifier.
Step 204: According to the mapping between the customer virtual local area network identifier and the service virtual local area network identifier, send the first packet to a network corresponding to the service virtual local area network identifier.

A method for forwarding the first packet by a forwarding chip of a user port on the access device according to the mapping may be specifically as follows: The user port receiving the first packet may add, according to the mapping corresponding to the customer virtual local area network identifier of the first packet, a service virtual local area network identifier that matches the first packet to the first packet, and then forward the first packet; or, the user port receiving the first packet replaces, according to the mapping corresponding to the customer virtual local area network identifier of the first packet, the customer virtual local area network identifier in the first packet with a service virtual local area network identifier that matches the first packet, and then forwards the first packet.

Because a process of analyzing the feature information of the packet and acquiring the service type of the packet is relatively complex, the process may be performed by a CPU of the access device. Specifically, after a user port of the access device receives a first packet (generally an initial packet of a service type received by the user port), the CPU of the access device may analyze the first packet and after acquiring a matched service virtual local area network identifier according to the feature information of the first packet, establish a mapping between the customer virtual local area network identifier of the first packet and the service virtual local area network identifier; then, the CPU may instruct the forwarding chip of the user port to forward, according to the established mapping between the customer virtual local area network identifier and the service virtual local area network identifier, a second packet (a packet carrying a customer virtual local area network identifier same as that carried in the first packet) subsequently received by the user port. Therefore, step 202 and step 203 may be performed by the CPU of the access device, while step 204 may be performed by the forwarding chip on the user port of the access device.

In addition, mappings between the customer virtual local area network identifier and the service and the service virtual local area network identifier corresponding to each user port on the access device may be checked to age unnecessary mappings. Specific details may be illustrated by using the following examples:
Example 1: If a packet that carries the customer virtual local area network identifier is not received within a predetermined duration, the mapping between the customer virtual local area network identifier and the service virtual local area network identifier is aged; or
Example 2: If a port shutdown notification is received from the home gateway, the mapping between the customer virtual local area network identifier and the service virtual local area network identifier is aged.

In this embodiment, after a user port that is of an access device and receives a first packet acquires, according to feature information of the first packet, a service virtual local area network identifier that matches the packet, the user port may automatically establish, according to a customer virtual local area network identifier carried in the first packet, a mapping between the customer virtual local area network identifier and the service virtual local area network identifier. This eliminates the need to pre-configure a mapping between the customer virtual local area network identifier and the service virtual local area network identifier on the access device, thereby simplifying access configurations during user service provisioning. In addition, a user is capable of always acquiring a correct mapping between the customer virtual local area network identifier and the service virtual local area network identifier by inserting a network cable into any one network port of a home gateway, thereby avoiding a case where services fail because the user inserts a network cable into a wrong network port of the home gateway. Therefore, the configuration of the method for user service access is simple and less error-prone, and may ensure the smoothness of services.

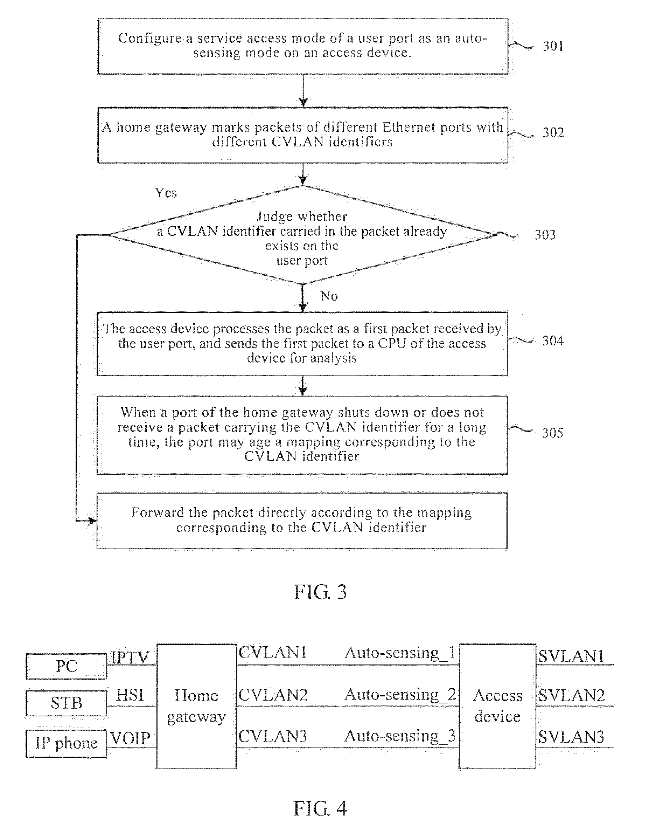

FIG. 3 is a flowchart of a method for user service access according to a second embodiment of the present invention. As shown in FIG. 3, the method for user service access includes:
Step 301: Configure a service access mode of a user port as an auto-sensing (auto-sensing) mode on an access device.

After a user port set to the auto-sensing mode receives a packet sent by a home gateway, the user port starts an auto-sensing process. If a mapping between a CVLAN identifier and an SVLAN identifier on the user port includes a CVLAN identifier carried in the packet, the user port may forward the packet directly according to the mapping between the CVLAN identifier and the SVLAN identifier; otherwise, the user port may query, according to feature information of the packet, an SVLAN identifier corresponding to a service type of the packet, such as an encapsulation or a dial-up keyword, and establish a mapping between the CVLAN identifier carried in the packet and the SVLAN identifier.
Step 302: The home gateway marks packets of different Ethernet (ETH) ports with different CVLAN identifiers.
Step 303: After receiving a packet sent by the home gateway through the user port, the access device determines whether a CVLAN identifier carried in the packet already exists on the user port (the access device may store a mapping table, where the mapping table records mappings between the CVLAN identifiers and the SVLAN identifiers on each user port of the access device, and the access device may determine whether the CVLAN identifier carried in the packet exists in a mapping included by the user port stored in the mapping table; if the CVLAN identifier exists in the mapping, it indicates that the CVLAN identifier carried in the packet already exists on the user port); if yes, forwards the packet directly according to the mapping between the CVLAN identifier and the SVLAN identifier (that is, bridge the CVLAN in the packet to a corresponding SVLAN); if no, performs step 304.

A specific method for forwarding the packet directly by a forwarding chip of the user port on the access device according to the mapping between the CVLAN identifier and the SVLAN identifier may be as follows: A corresponding SVLAN identifier is added to the packet carrying the CVLAN identifier, or the CVLAN identifier in the packet is replaced with a corresponding SVLAN identifier; then, the packet including the SVLAN identifier is sent to a network corresponding to the SVLAN identifier, such as a specified broadband remote access server (Broadband Remote Access Server, BRAS for short) or a server.
Step 304: The access device processes the packet as a first packet (an initial packet of a service type or a first packet after an error occurs) received by the user port, and sends the first packet to a CPU of the access device for analysis. To free the CPU from impact, after the first packet is sent to the CPU, the CPU is disabled to refuse other packets. In this case, other packets to be sent to the CPU are all discarded during analysis of the first packet by the CPU. After the first packet is successfully analyzed, the CPU is enabled for receiving other packets.. The CPU firstly acquires through matching an SVLAN identifier corresponding to a user encapsulation type or a dial-up packet keyword of the first packet, and then extracts a CVLAN identifier of the first packet to establish a mapping between the CVLAN identifier and the SVLAN identifier, so as to establish a bridging relationship from the CVLAN of the first packet to a corresponding SVLAN. A second packet with the same CVLAN identifier subsequently received by the user port may be bridged to the corresponding SVLAN.
Step 305: When a port of the home gateway shuts down (shutdown) or does not receive a packet carrying the CVLAN identifier for a long time, the port may age the mapping corresponding to the CVLAN identifier.

Specifically, the access device pre-configures a service access mode of a user port as a connection in auto-sensing (auto-sensing) mode, and an uplink packet sent by the home gateway to the access device carries a CVLAN identifier configured by a port of the home gateway; after the access device captures a first packet carrying a new CVLAN identifier or a second packet carrying the existing CVLAN identifier, the CVLAN identifier may be mapped to a corresponding SVLAN identifier on the access device.

FIG. 4 is a schematic diagram of the application of the method for user service access provided in a second embodiment of the present invention in different service types. As shown in FIG. 4, for example, three types of services are configured on the home gateway: The first type of service is a high speed Internet (HSI) service, which dials up over the Point-to-Point Protocol over Ethernet (PPPOE); the second type of service is an Internet Protocol television (IPTV) service; and the third type of service is a voice over Internet Protocol (VOIP) service, which acquires an IP by using an IP phone over the Dynamic Host Configuration Protocol (Dynamic Host Configuration Protocol, DHCP for short), and uses a user encapsulation type IPOE. CVLAN identifiers of three ETH ports corresponding to the three types of services HSI, IPTV, and VOIP of the home gateway are "CVLAN1", "CVLAN22", and "CVLAN3" respectively. The access device configures three auto-sensing modes (auto-sensing_1, auto-sensing_2, and auto-sensing_3) on the user ports respectively, and SVLAN identifiers of the user ports are "SVLAN1", "SVLAN2", and "SVLAN3" respectively. Service matching modes of the SVLANs are as follows: The SVLAN1 matches a user encapsulation type PPPOE packet, SVLAN2 matches a user encapsulation type IGMP packet, and SVLAN3 matches a user encapsulation type non-IGMP IPOE packet.

When a user of the HSI service dials up over the PPPOE, a PPPOE packet sent from the home gateway carries CVLAN1; after the access device captures the PPPOE packet on a user port and it is assumed the packet is a first PPPOE packet, the user encapsulation type PPPOE may be matched; then, a mapping between CVLAN1 and SVLAN1 is established, and CVLAN1 is configured on the user port.

When a user of the IPTV service plays the service on demand by using a set top box (STP), the user sends an IGMP packet to the access device over the Internet Group Management Protocol (Internet Group Management Protocol, IGMP for short), where the IGMP packet carries CVLAN2; after the access device identifies an IGMP packet sent by a user port, the user encapsulation type IGMP may be matched; then, a mapping between CVLAN2 and SVLAN2 is configured on the user port, and CVLAN2 is configured on the user port.

When an IP phone of a user of the VOIP service acquires an IP over the DHCP, the DHCP request packet carries CVLAN3, and the DHCP request packet is captured on the access device; if the user encapsulation type IPOE is matched, a mapping between CVLAN3 and SVLAN3 is established, and CVLAN3 is configured on the user port.

In addition, if the access device detects that a CVLAN identifier stored on the user port does not have uplink packets in a period of time, the access device may age a mapping corresponding to the CVLAN identifier; or when a port of the home gateway shuts down (shutdown), a port shutdown notification may be sent to the access device, where the port shutdown notification carries a CVLAN identifier corresponding to the shutdown port, and the access device may age a mapping of the CVLAN identifier corresponding to the shutdown port.

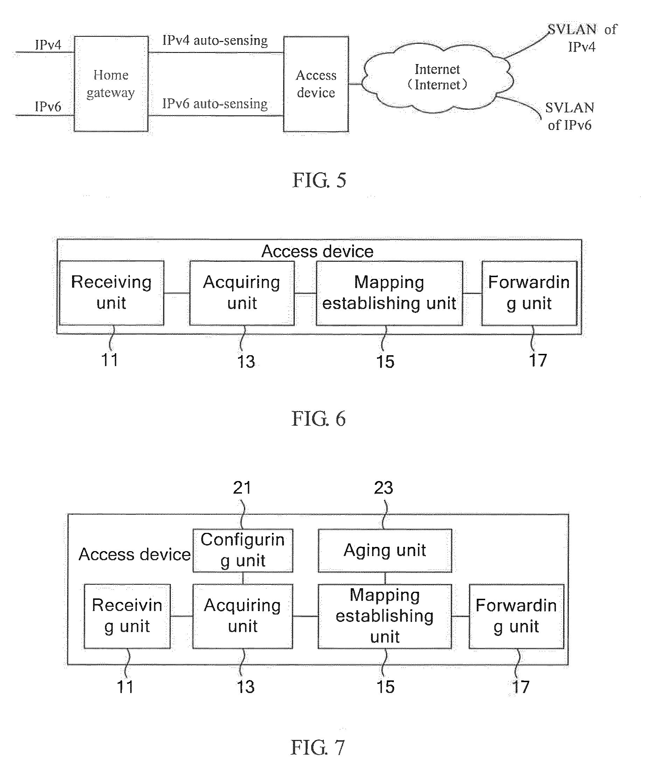

FIG. 5 is a schematic diagram of the application of the method for user service access provided in a second embodiment of the present invention in an IP packet. As shown in FIG. 5, when a user accesses the Internet by using the home gateway, a packet thereof may be an IPv4 packet or an IPv6 packet, where the IPv4 packet and the IPv6 packet are IP packets. The IP packet may be encapsulated in a PPP packet and further encapsulated in an Ethernet packet, and the foregoing PPPOE packet uses this encapsulation form. The IP packet may also be encapsulated in an Ethernet packet directly, and the foregoing IPOE packet uses this encapsulation form. In a practical application, an operator expects to transmit the IPv4 packet and the IPv6 packet to different transport networks. Therefore, in this embodiment, on the access device, whether the IP packet is an IPv4 packet or an IPv6 packet may be differentiated by identifying a version (version) or an Ethernet type (ETHTYPE) of the IP packet, and the IPv4 packet and the IPv6 packet may be bridged to different SVLANs respectively.

In this embodiment, a mapping between a CVLAN identifier of a user and an SVLAN identifier is not pre-configured on an access device, but is acquired by analyzing a captured first packet (a user port receiving the first packet does not have the CVLAN identifier and the SVLAN identifier of the first packet). This is an auto-sensing (auto-sensing) process, which simplifies a configuration process. In addition, a user is capable of always acquiring a correct mapping between a customer virtual local area network identifier and a service local area network identifier by inserting a network cable into any one network port of a home gateway, thereby avoiding a case where services fail because the user inserts a network cable into a wrong network port of the home gateway. Because the access device does not fix the configuration of the mapping between the CVLAN identifier and the SVLAN identifier, after a first packet of a service is captured on the access device, a matching SVLAN identifier may be acquired according to feature information of the packet, so that the packet is bridged to a correct SVLAN. Therefore, the configuration of the method for user service access is simple and less error-prone, and may ensure the smoothness of services.

FIG. 6 is a schematic structural diagram of an access device according to a third embodiment of the present invention. As shown in FIG. 6, the access device includes:
a receiving unit 11, configured to receive a first packet sent by a home gateway, where the first packet carries a customer virtual local area network identifier that matches the first packet;
an acquiring unit 13, configured to acquire, according to feature information of the first packet, a service virtual local area network identifier that matches the first packet;
a mapping establishing unit 15, configured to establish a mapping between the customer virtual local area network identifier and the service virtual local area network identifier according to the customer virtual local area network identifier and the service virtual local area network identifier; and
a forwarding unit 17, configured to send, according to the mapping between the customer virtual local area network identifier and the service virtual local area network identifier, the first packet to a network corresponding to the service virtual local area network identifier.

In this embodiment, after an acquiring unit of an access device acquires, according to feature information of a first packet, a service virtual local area network identifier that matches the first packet, a mapping establishing unit may automatically establish, according to a customer virtual local area network identifier carried in the first packet, a mapping between the customer virtual local area network identifier and the service virtual local area network identifier. This eliminates the need to pre-configure a mapping between the customer virtual local area network identifier and the service virtual local area network identifier on the access device, thereby simplifying access configurations during user service provisioning. In addition, a user is capable of always acquiring a correct mapping between the customer virtual local area network identifier and the service virtual local area network identifier by inserting a network cable into any one network port of a home gateway, thereby avoiding a case where services fail because the user inserts a network cable into a wrong network port of the home gateway. Therefore, the configuration of the method for user service access is simple and less error-prone, and may ensure the smoothness of services.

FIG. 7 is a schematic structural diagram of an access device according to a fourth embodiment of the present invention. As shown in FIG. 7, on the basis of the fourth embodiment, the acquiring unit 13 of the access device is specifically configured to: acquire a service type of the first packet through an analysis according to the feature information of the first packet, and acquire, according to the service type, a service virtual local area network identifier that matches the service.

The feature information may be at least one of a user encapsulation type, a dial-up packet keyword, a packet format, a version number, or an Ethernet type; and the service type may include at least one of a high speed Internet service, an Internet Protocol television service, a voice over Internet Protocol service, an IPv4 service, and an IPv6 service.

Further, the access device may further include a configuring unit 21 configured to configure correspondence between the service type and the service virtual local area network identifier on the access device.

Further, the receiving unit 11 is further configured to receive a second packet sent by the home gateway, where the second packet carries a customer virtual local area network identifier that matches the second packet.

The forwarding unit 17 is further configured to: query, according to the carried customer virtual local area network identifier, the mapping between the customer virtual local area network identifier and the service virtual local area network identifier established by the mapping establishing unit so as to acquire a service virtual local area network identifier corresponding to the second packet, and send, according to the acquired service virtual local area network identifier, the second packet to a network corresponding to the service virtual local area network identifier.

In addition, the access device may further include an aging unit 23 configured to: if a packet that carries the customer virtual local area network identifier is not received within a predetermined duration, age the mapping between the customer virtual local area network identifier and the service virtual local area network identifier; or if a port shutdown notification is received from the home gateway, age the mapping between the customer virtual local area network identifier and the service virtual local area network identifier.

In this embodiment, after an acquiring unit of an access device acquires, according to feature information of a first packet, a service virtual local area network identifier that matches the first packet, a mapping establishing unit may automatically establish, according to a customer virtual local area network identifier carried in the first packet, a mapping between the customer virtual local area network identifier and the service virtual local area network identifier. This eliminates the need to pre-configure a mapping between the customer virtual local area network identifier and the service virtual local area network identifier on the access device, thereby simplifying access configurations during user service provisioning. In addition, a user is capable of always acquiring a correct mapping between the customer virtual local area network identifier and the service virtual local area network identifier by inserting a network cable into any one network port of a home gateway, thereby avoiding a case where services fail because the user inserts a network cable into a wrong network port of the home gateway. Therefore, the configuration of the method for user service access is simple and less error-prone, and may ensure the smoothness of services.

A fifth embodiment of the present invention provides a system for user service access, and for specific details, reference may be made to FIG. 1. The system for user service access may include a home gateway 20 and an access device 30.

The home gateway 20 is configured to receive a first packet sent by a user terminal, and send the first packet to an access service.

The access device 30 is configured to: receive a first packet sent by the home gateway, where the first packet carries a customer virtual local area network identifier that matches the first packet; acquire, according to feature information of the first packet, a service virtual local area network identifier that matches the first packet; establish a mapping between the customer virtual local area network identifier and the service virtual local area network identifier according to the customer virtual local area network identifier and the service virtual local area network identifier; and send, according to the mapping between the customer virtual local area network identifier and the service virtual local area network identifier, the first packet to a network corresponding to the service virtual local area network identifier.

Specifically, the foregoing feature information may be at least one of a user encapsulation type, a dial-up packet keyword, a packet format, a version number, or an Ethernet type; and the service type may include at least one of a high speed Internet service, an Internet Protocol television service, a voice over Internet Protocol service, an IPv4 service, and an IPv6 service. The access device provided in this embodiment may use an access device of any structure provided in the foregoing embodiments of the present invention.

In this embodiment, after a user port that is of an access device and receives a first packet acquires, according to feature information of the first packet, a service virtual local area network identifier that matches the first packet, the user port may automatically establish, according to a customer virtual local area network identifier carried in the first packet, a mapping between the customer virtual local area network identifier and the service virtual local area network identifier. This eliminates the need to pre-configure a mapping between the customer virtual local area network identifier and the service virtual local area network identifier on the access device, thereby simplifying access configurations during user service provisioning. In addition, a user is capable of always acquiring a correct mapping between the customer virtual local area network identifier and the service virtual local area network identifier by inserting a network cable into any one network port of a home gateway, thereby avoiding a case where services fail because the user inserts a network cable into a wrong network port of the home gateway. Therefore, the configuration of the method for user service access is simple and less error-prone, and may ensure the smoothness of services.

A person of ordinary skill in the art may understand that, all or a part of the steps of the foregoing method embodiments may be implemented by a program instructing relevant hardware. The foregoing programs may be stored in a computer readable storage medium. When the program runs, the foregoing steps included in the method embodiments are performed. The foregoing storage medium includes various mediums capable of storing program codes, such as a ROM, a RAM, a magnetic disk or an optical disk.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that they may still make modifications to the technical solutions described in the foregoing embodiments, or make equivalent replacements to some technical features thereof, without departing from the spirit and scope of the technical solutions of the embodiments of the present invention.

## Claims

1. A method for user service access, comprising:
receiving a first packet sent by a home gateway, wherein the first packet carries a customer virtual local area network identifier that matches the first packet;
acquiring, according to feature information of the first packet, a service virtual local area network identifier that matches the first packet;
establishing a mapping between the customer virtual local area network identifier and the service virtual local area network identifier according to the customer virtual local area network identifier and the service virtual local area network identifier; and
sending, according to the mapping between the customer virtual local area network identifier and the service virtual local area network identifier, the first packet to a network corresponding to the service virtual local area network identifier.

2. The method for user service access according to claim 1, wherein the acquiring a service virtual local area network identifier that matches the first packet comprises:
acquiring a service type of the first packet through an analysis according to the feature information of the first packet; and
acquiring, according to the service type, a service virtual local area network identifier that matches the service type.

3. The method for user service access according to claim 2, further comprising:
configuring correspondence between the service type and the service virtual local area network identifier on an access device.

4. The method for user service access according to claims 2 or 3, wherein the feature information is at least one of a user encapsulation type, a dial-up packet keyword, a packet format, a version number, or an Ethernet type and the service type comprises at least one of a high speed Internet service, an Internet Protocol television service, a voice over Internet Protocol service, an Internet Protocol version 4, IPv4, service, and an Internet Protocol version 6 IPv6 service.

5. The method for user service access according to any one of claims 1-3, further comprising:
receiving a second packet sent by the home gateway, wherein the second packet carries a customer virtual local area network identifier that matches the second packet;
querying the mapping between the customer virtual local area network identifier and the service virtual local area network identifier according to the carried customer virtual local area network identifier so as to acquire a service, virtual local area network identifier corresponding to the second packet; and
sending, according to the acquired service virtual local area network identifier, the second packet to a network corresponding to the service virtual local area network identifier.

6. The method for user service access according to any one of claims 1-3, before the receiving a first packet sent by a home gateway, comprising:
pre-configuring a service access mode of each user port on the access device as an auto-sensing mode.

7. The method for user service access according to any one of claims 1-3, further comprising:
if a packet that carries the customer virtual local area network identifier is not received within a predetermined duration, aging the mapping between the customer virtual local area network identifier and the service virtual local area network identifier; or
if a port shutdown notification is received from the home gateway, aging the mapping between the customer virtual local area network identifier and the service virtual local area network identifier.

8. An access device, comprising:
a receiving unit, configured to receive a first packet sent by a home gateway, wherein the first packet carries a customer virtual local area network identifier that matches the first packet;
an acquiring unit, configured to acquire, according to feature information of the first packet, a service virtual local area network identifier that matches the first packet;
a mapping establishing unit, configured to establish a mapping between the customer virtual local area network identifier and the service virtual local area network identifier according to the customer virtual local area network identifier and the service virtual local area network identifier; and
a forwarding unit, configured to send, according to the mapping between the customer virtual local area network identifier and the service virtual local area network identifier, the first packet to a network corresponding to the service virtual local area network identifier.

9. The access device according to claim 8, wherein the acquiring unit is specifically configured to acquire a service type of the first packet through an analysis according to the feature information of the first packet, and acquire, according to the service type, a service virtual local area network identifer that matches the service type.

10. The network device according to claim 9, further comprising:
a configuring unit, configured to configure correspondence between the service type and the service virtual local area network identifier on the access device.

11. The access device according to claim 9 or 10, wherein the feature information is at least one of a user encapsulation type, a dial-up packet keyword, a packet format, a version number, or an Ethernet type and the service type comprises at least one of a high speed Internet service, an Internet Protocol television service, a voice over Internet Protocol service, an Internet Protocol version 4 IPv4 service, and an Internet Protocol version 6 IPv6 service.

12. The access device according to any one of claims 8-10, wherein:
the receiving unit is further configured to receive a second packet sent by the home gateway, wherein the second packet carries a customer virtual local area network identifier that matches the second packet; and
the forwarding unit is further configured to: query, according to the carried customer virtual local area network identifier, the mapping between the customer virtual local area network identifier and the service virtual local area network identifier established by the mapping establishing unit so as to acquire a service virtual local area network identifier corresponding to the second packet; and send, according to the acquired service virtual local area network identifier, the second packet to a network corresponding to the service virtual local area network identifier.

13. The access device according to any one of claims 8-10, further comprising:
an aging unit, configured to: if a packet that carries the customer virtual local area network identifier is not received within a predetermined duration, age the mapping between the customer virtual local area network identifier and the service virtual local area network identifier; or if a port shutdown notification is received from the home gateway, age the mapping between the customer virtual local area network identifier and the service virtual local area network identifier.

14. A system for user service access, comprising a home gateway and an access device, wherein:
the home gateway is configured to receive a first packet sent by a user terminal, and send the first packet to an access service; and
the access device is configured to: receive a first packet sent by the home gateway, wherein the first packet carries a customer virtual local area network identifier that matches the first packet; acquire, according to feature information of the first packet, a service virtual local area network identifier that matches the first packet; establish a mapping between the customer virtual local area network identifier and the service virtual local area network identifier according to the customer virtual local area network identifier and the service virtual local area network identifier; and send, according to the mapping between the customer virtual local area network identifier and the service virtual local area network identifier, the first packet to a network corresponding to the service virtual local area network identifier.

15. The system for user service access according to claim 14, wherein the feature information is at least one of a user encapsulation type, a dial-up packet keyword, a packet format, a version number, or an Ethernet type and the service type comprises at least one of a high speed Internet service, an Internet Protocol television service, a voice over Internet Protocol service, an Internet Protocol version 4 IPv4 service, and an Internet Protocol version 6 IPv6 service.
